# EUROPÄISCHE PATENTSCHRIFT

(11) **EP 1 284 212 B1**
(45) Veröffentlichungstag und Bekanntmachung des Hinweises auf die Patenterteilung: **17.12.2003**
(21) Anmeldenummer: 02014576.9
(22) Anmeldetag: 02.07.2002
(51) Int. Cl.: B60K 15/05

(54) **Kraftfahrzeug-Kraftstofftank mit einem Einfüllstutzen zur Aufnahme einer Zapfpistole für Dieselkraftstoff**
Fuel tank for a vehicle comprising a filler neck for receiving a diesel fuel filler nozzle
Réservoir de carburant pour un véhicule avec um embout pour recevoir un pistolet de remplissage de gazole

(30) Priorität: 11.08.2001 DE 10139665
(43) Veröffentlichungstag der Anmeldung: 19.02.2003
(73) Patentinhaber: Bayerische Motoren Werke Aktiengesellschaft, 80809 München (DE)
(72) Erfinder: Nefischer, Peter, 4320 Perg (AT); Wimmer, Rudolf, 4431 Haidershofen (AT); Steindl, Werner, 4810 Gmunden (AT)

(56) Entgegenhaltungen:
- US-B1- 6 302 169

## Beschreibung

Die Erfindung betrifft einen Kraftfahrzeug-Kraftstofftank mit einem Einfüllstutzen, der hinsichtlich seiner Abmessung zur Aufnahme einer einen größeren Durchmesser aufweisenden Tank-Zapfpistole, insbesondere einer Zapfpistole für Dieselkraftstoff, vorgesehen ist, sowie mit einem Element, welches auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser in den Einfüllstutzen ein Befüllen des Kraftstofftanks zumindest behindert wird. Zum technischen Umfeld wird beispielshalber auf die DE 196 39 825 A1 verwiesen, während ein Kraftstofftank nach dem Oberbegriff des Anspruchs 1 in der nicht vorveröffentlichten deutschen Patentanmeldung 100 51 847 beschrieben ist.

Mit der Markteinführung von Bleifrei-Kraftstoffen für Ottomotoren wurden die bis dahin für sämtliche Kraftstoffsorten einen einheitlichen Durchmesser aufweisenden Tank-Zapfpistolen (jedenfalls solche für Personenkraftwagen) für diesen neuen Kraftstoff im Durchmesser reduziert. Durch einen sog. Restriktor mit einer sog. Bleifrei-Klappe im Einfüllrohr von Kfz.-Kraftstofftanks war und ist es somit nicht möglich, bleihaltigen Otto-Kraftstoff oder Diesel-Kraftstoff (die an den Tankstellen hierfür vorhandenen Zapfpistolen besitzen den gleichen, gegenüber den Zapfpistolen für Bleifrei-Kraftstoff größeren Durchmesser) in den Kraftstofftank eines Kfz.'s einzufüllen, das für Betrieb mit Bleifrei-Kraftstoffen vorgesehen ist. Auf diese Weise ist der an diesen Fahrzeugen vorhandene Abgaskatalysator sowie die Hochdruckpumpe des Brennkraftmaschinen-Einspritzsystemsystems sicher vor einer Zerstörung, hervorgerufen durch Falschbetankung mit bleihaltigem Kraftstoff, geschützt.

Weiterhin ist es jedoch möglich, dass versehentlich bleifreier Otto-Kraftstoff (Benzin) in den Tank eines Kfz.'s eingefüllt wird, welches mit Dieselkraftstoff zu betreiben ist. Wird dann einem Dieselmotor reiner Ottokraftstoff zugeführt, so kann dies zu erheblichen Schäden führen. Allenfalls ein geringer Anteil von Ottokraftstoff bzw. Benzin in einer relativ großen Menge von Dieselkraftstoff kann toleriert werden (und wurde bzw. wird teilweise im Winter beigemengt, um den Kaltstart zu erleichtern), einen höheren Benzinanteil in einem Diesel-Benzin-Kraftstoffgemisch gilt es jedoch unbedingt zu vermeiden.

Mit der vorliegenden Erfindung soll nun aufgezeigt werden, wie eine Falschbetankung insbesondere eines mit Dieselkraftstoff zu betreibenden Fahrzeuges mit Bleifrei-Benzin vermieden werden kann, bzw. wie vermieden werden kann, dass ein Kraftstofftank mit einem Einfüllstutzen mit größerem Durchmesser mit Kraftstoff aus einer Zapfpistole mit kleinerem Durchmesser befüllt wird. (=Aufgabe der Erfindung).

Die Lösung dieser Aufgabe ist dadurch gekennzeichnet, dass ein (in der bereits genannten, nicht vorveröffentlichten deutschen Patentanmeldung 100 51 847 beschriebenes) Element in Form eines im Einfüllstutzen stromab der vollständig in diesen eingeführten Zapfpistole angeordneten Drosselelements ausgebildet ist, das in seiner sog. Schließposition den freien Querschnitt des Einfüllstutzens erheblich einschränkt und mittels eines Übertragungselementes in seine den Querschnitt des Einfüllstutzens im wesentlichen freigebende Offenposition gebracht werden kann, wobei am Übertragungselement lediglich eine in den Einfüllstutzen eingeführte Tank-Zapfpistole mit besagtem größeren Durchmesser zur Anlage kommen kann, eine Tank-Zapfpistole mit kleinerem Durchmesser jedoch nicht, so dass das Drosselelement lediglich beim Einführen einer Tank-Zapfpistole mit besagtem größeren Durchmesser von dieser in die freigebende Offenposition gebracht werden kann. Vorteilhafte Aus- und Weiterbildungen sind Inhalt der Unteransprüche.

Erfindungsgemäß ist ein Drosselventil vorgesehen, das üblicherweise, d.h. solange nicht eine "richtige" Tank-Zapfpistole mit größerem Durchmesser in den Tankstutzen eingeführt ist, zumindest teilweise geschlossen ist und damit ein Einleiten von Kraftstoff in den Kraftstofftank behindert, und das nur von der "richtigen", d.h. von einer einen größeren Durchmesser aufweisenden Tank-Zapfpistole praktisch vollständig geöffnet werden kann, um danach ein Einleiten von Kraftstoff in den Kraftstofftank zu ermöglichen. Insofern ist die Funktion dieses Drosselventils ähnlich derjenigen der bekannten "Bleifrei-Klappe". Jedoch ist das von der Bleifrei-Klappe bekannte Prinzip, nach welchem diese Klappe lediglich von einer der verschieden dimensionierten Tank-Zapfpistolen, nämlich derjenigen mit einem kleineren Durchmesser, geöffnet werden kann, hier naturgemäß nicht nutzbar. Bei der bekannten Bleifreiklappe ermöglicht es nämlich eine einfache Barriere, eine Tank-Zapfpistole mit größerem Durchmesser von der Bleifreiklappe fernzuhalten, während eine Tank-Zapfpistole mit kleinerem Durchmesser an dieser Barriere vorbeigeführt werden kann und danach die Bleifrei-Klappe aufstoßen kann.

Da eine solche einfache Barriere jedoch nicht eine Tank-Zapfpistole mit kleinerem Durchmesser zurückhalten, hingegen eine solche mit größerem Durchmesser passieren lassen kann, wird mit der vorliegenden Erfindung eine Übertragungselement vorgeschlagen, an der lediglich eine "richtige" Tank-Zapfpistole mit dem größeren Durchmesser zum Anliegen kommen kann, und welches daraufhin das Drosselelement in seine Offenstellung überführt. Wenn hingegen eine kleinere Tank-Zapfpistole mit dem geringeren Durchmesser in den Einfüllstutzen eingeführt wird, so kann diese erfindungsgemäß nicht in einer solchen Weise am Übertragungselement zum Anliegen kommen, dass danach durch weiteres Einführen des Tank-Zapfpistole in den Einfüllstutzen das besagte Drosselelement geöffnet würde.

Dabei ist ein Drosselelement, welches in seiner sog. Schließposition den freien Querschnitt des Einfüllstutzens zwar erheblich einschränkt, jedoch diesen freien Querschnitt nicht vollständig verschließt, insofern von Vorteil, als auch bei im wesentlichen "geschlossenem" Drosselelement eine geringe Menge von Kraftstoff in den sich an den Einfüllstutzen anschließenden Kraftstofftank eingefüllt werden kann. So kann bspw. - falls dies gewünscht ist - aus einer Zapfpistole mit kleineren Durchmesser über einen Einfüllstutzen für eine Diesel-Zapfpistole mit größerem Durchmesser eine geringe Menge von Ottkraftstoff in den Kraftstofftank auch dann eingefüllt werden, wenn sich das Drosselelement in seiner sog. Schließposition befindet. Aufgrund der erheblichen Drosselung durch dieses Drosselelement baut sich dann jedoch im Einfüllstutzen relativ kurzfristig ein Rückstau und somit Überdruck ein, der die übliche Abschaltautomatik, die an jeder üblichen Zapfpistole vorgesehen ist, aktiviert und somit ein weiteres Einfüllen von "falschem" Kraftstoff in den Kraftstofftank verhindert.

Ein erfindungsgemäßes Drosselelement kann somit quasi wie eine verstellbare Blende wirken und auch dementsprechend aufgebaut sein. Dabei ist eine Gestaltung als sog. Schlitzblende möglich, wobei das Drosselelement bevorzugt aus mehreren translatorisch in den freien Querschnitt des Einfüllstutzens hineinschiebbaren bzw. aus diesem herausschiebbaren Plattenelement(en) besteht. Alternativ ist auch eine Ausführung als sog. Fächerblende möglich, wobei bevorzugt mehrere in den freien Querschnitt des Einfüllstutzens hineinschwenkbare bzw. aus diesem herausschwenkbare Plattenelemente vorgesehen sind. Dabei können die zu verschwenkenden Plattenelemente des Drosselelements entweder um eine im wesentlichen parallel oder um eine im wesentlichen senkrecht zur Längsachse des Einfüllstutzens verlaufende Schwenkachse verschwenkbar sein. In Abhängigkeit von der detaillierten Ausgestaltung des Betätigungsmechanismus, der im Öffnungssinne des Drosselelements von einer Tank-Zapfpistole mit dem besagten größeren Durchmesser in Gang gesetzt wird, hat jede dieser genannten Varianten spezifische Vorteile, so bspw. hinsichtlich Bauraumbedarf, Zuverlässigkeit und Bauaufwand. Dabei empfiehlt es sich grundsätzlich, dass das besagte Drosselelement bzw. das oder die Plattenelemente desselben durch Federkraft in seiner/ihrer Schließposition gehalten wird/werden. Ohne dass die "richtige" Zapfpistole in den Einfüllstutzen eingeführt ist, ist das Drosselelement somit im wesentlichen geschlossen. Nur mit Einführen der "richtigen" Zapfpistole mit dem größeren Durchmesser kann das Drosselelement somit in die sog. Offenposition überführt werden.

Für diese Überführung des Drosselelementes in seine Offenposition muss die "richtige" Zapfpistole geeignet auf das Drosselelement einwirken, und zwar bevorzugt über das bereits genannte Übertragungselement. Ohne extrem aufwändige zusätzliche Stellmechanik kann dies dabei erfolgen, wenn das von einer Zapfpistole mit größerem Durchmesser längs der Längsachse des Einfüllstutzens gegen die Kraft eines Federelements verschobene Übertragungselement unter Zwischenschaltung einer Kulissenbahn auf die Plattenelemente im Öffnungssinn einwirkt. Somit kann die Einführbewegung der Zapfpistole in den Einfüllstutzen gleichzeitig in eine Öffnungsbewegung des Drosselelementes umgesetzt bzw. übertragen werden. Hierbei sind wieder verschiedene Ausführungsformen möglich. So kann die Kulissenbahn direkt am Übertragungselement vorgesehen sein, wobei die Längsverschiebung des Übertragungselementes bevorzugt abermals in eine translatorische Bewegung des Drosselelements bzw. der Plattenelemente desselben umgesetzt wird. Ist jedoch eine rotatorische Bewegung der Plattenelemente erforderlich, wie dies bspw. bei einer später noch erläuterten sog. Fächerblende der Fall ist, so ist es günstiger, wenn das Übertragungselement mit einem Stift oder dgl. versehen ist, der in eine Kulissenbahn eines Stellelements eingreift, welches das oder die Plattenelement(e) bewegt.

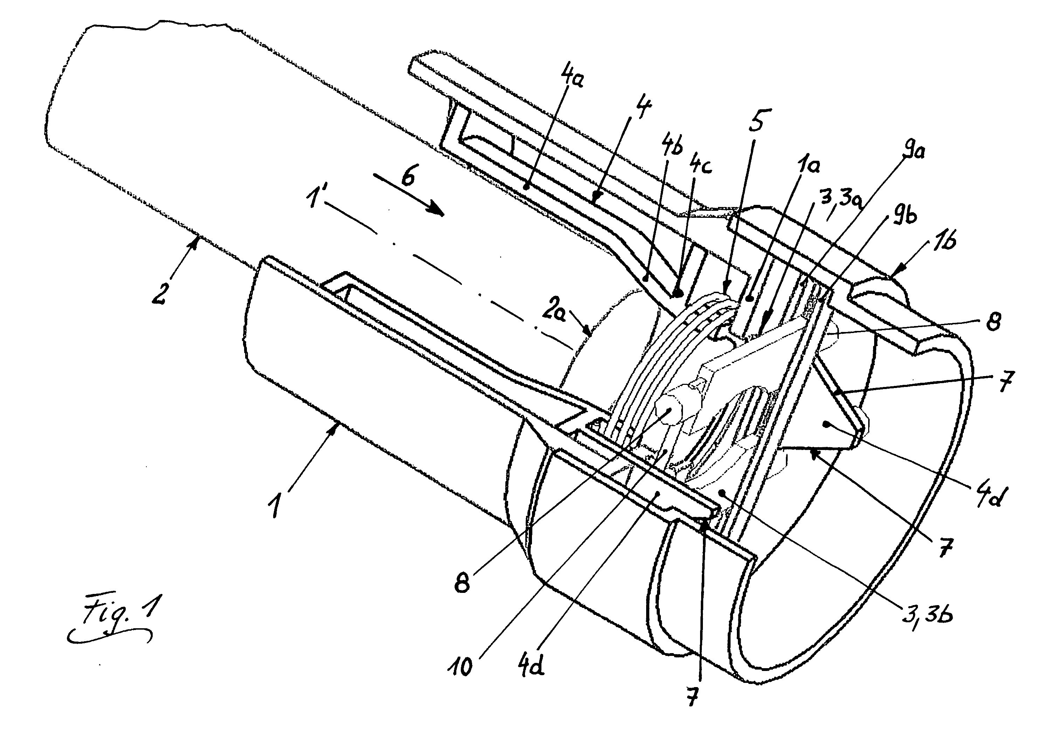

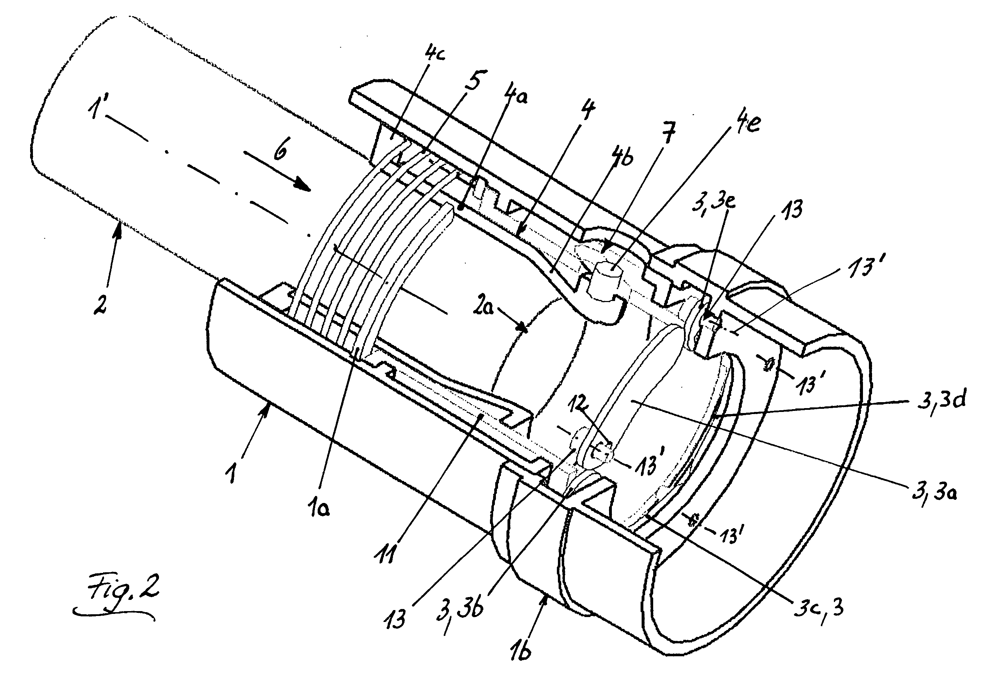

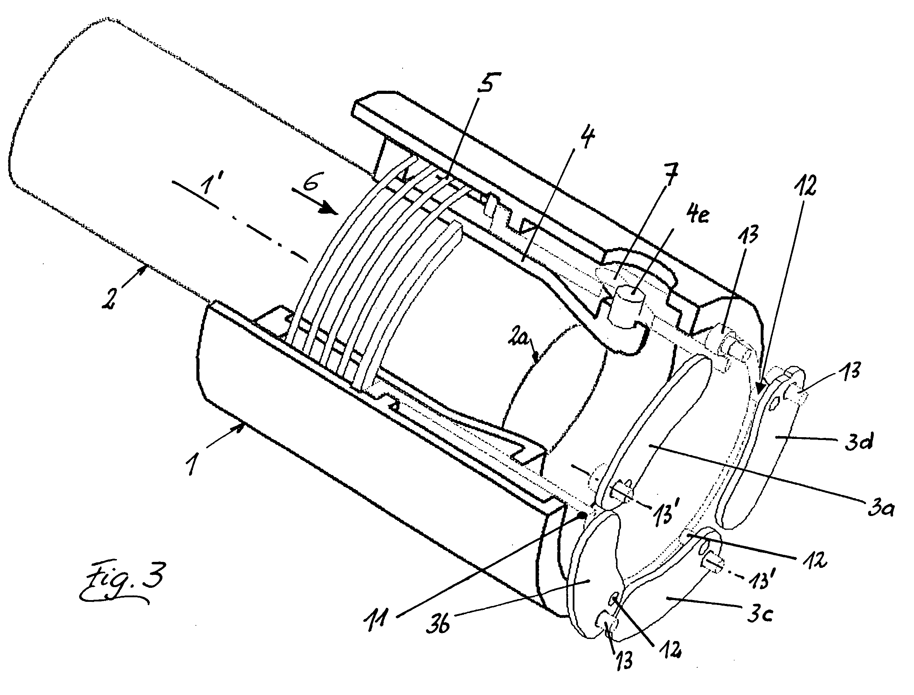

Im folgenden wird die Erfindung anhand zweier lediglich prinzipiell dargestellter bevorzugter Ausführungsbeispiele weiter erläutert, wobei die beigefügte **Figur 1** in räumlicher Ansicht einen teilweise aufgeschnittenen Einfüllstutzen mit eingeführter "richtiger" Zapfpistole und demzufolge geöffnetem Drosselelement in Form einer sog. Schlitzblende mit translatorisch verschiebbaren bzw. verschobenen Plattenelementen zeigt. In den **Figuren 2, 3** ist eine andere Ausführungsform der Erfindung mit rotatorisch bewegbaren Plattenelementen, die eine sog. Fächerblende als Drosselelement bilden, in einer vergleichbaren Ansicht dargestellt, wobei in **Fig.3** der Übersichtlichkeit bzw. des besseren Verständnisses wegen eine sog. untere Aufnahmehülse für den Einfüllstutzen gegenüber der Darstellung von **Fig.2** entfernt ist. In sämtlichen Figuren sind für gleiche Elemente die gleichen Bezugsziffern verwendet und erfindungswesentlich können grundsätzlich sämtliche näher beschriebenen Merkmale sein.

Mit der Bezugsziffer 1 ist ein an einem nicht dargestellten Kraftstofftank eines Kraftfahrzeugs vorgesehener Einfüllstutzen bezeichnet, von dem hier lediglich der für die vorliegende Erfindung wesentliche Abschnitt dargestellt ist und durch den hindurch Kraftstoff in den Kraftstofftank eingefüllt werden kann, indem in den Einfüllstutzen eine Tank-Zapfpistole 2 eingeführt wird. Wie bekannt existieren (zur Betankung von PKWs) an den Tankstellen zwei unterschiedliche Tank-Zapfpistolen, nämlich solche mit einem größeren Außen-Durchmesser (in der Größenordnung von 24 mm) und solche mit einem geringeren Außen-Durchmesser (von ca. 20 mm). Eine letztgenannte wird grundsätzlich zur Abgabe von bleifreiem Ottokraftstoff verwendet. Eine erstgenannte mit größerem Durchmesser ist in den Figuren unter der Bezugsziffer 2 dargestellt und wird grundsätzlich zur Abgabe von Dieselkraftstoff verwendet. Dabei wird die Tank-Zapfpistole 2 hier von links gemäß Pfeilrichtung 6 in den Einfüllstutzen 1 eingeführt, um den Kraftstofftank, der sich rechtsseitig an den Einfüllstutzen 1 anschließt, zu befüllen.

Im Einfüllstutzen 1 ist stromab der vollständig in den Einfüllstutzen 1 eingeführten Zapfpistole 2 ein Drosselelement 3 angeordnet, das in sämtlichen Figuren in seiner Offenposition dargestellt ist. Beim Drosselelement 3 nach **Figur 1** handelt es sich um eine sog. Schlitzblende, die durch zwei sog. Plattenelemente 3a, 3b gebildet wird, die in einer zur Längsachse 1' des Einfüllstutzens 1 senkrechten Ebene translatorisch aufeinander zu bzw. voneinander weg verschiebbar sind. Beim Drosselelement 3 nach den **Figuren 2, 3** handelt es sich um eine sog. Fächerblende, die hier durch fünf sog. Plattenelemente 3a, 3b, 3c, 3d, 3e gebildet wird, die jeweils um eine zur Längsachse 1' des Einfüllstutzens 1 parallele Schwenkachse 13' rotatorisch aufeinander zu bzw. voneinander weg verschwenkbar sind. In **Fig.3** wurde dabei der Übersichtlichkeit halber das Plattenelement 3e entfernt; auch sind in **Fig.2** nur einige der Plattenelemente 3a - 3e sichtbar.

Befinden sich die in Plattenelemente 3a, 3b usw. der beiden Ausführungsbeispiele in der figürlich dargestellten Position, so kann praktisch ungehindert Kraftstoff aus der Zapfpistole 2 in den sich rechtsseitig an den Einfüllstutzen 1 anschließenden Kraftstofftank gelangen. Befinden sich hingegen beim Ausführungsbeispiel nach **Figur 1** die Plattenelemente 3a, 3b in einer aufeinander zu bewegten Position und sind somit in den freien Querschnitt des Einfüllstutzens 1 hineingeschoben, so wird ein Kraftstofffluss aus der Zapfpistole 2 zumindest wesentlich behindert bzw. vollständig unterbunden.

Letzteres tritt unabhängig von der Abmessung des Schlitzes im sog. Schlitzblenden-Drosselelement 3 dann ein, wenn aufgrund des sich durch das somit im wesentlichen geschlossene Drosselelement 3 hervorgerufenen Kraftstoff-Rückstaus im Einfüllstutzen 1 die bekannte Abschaltautomatik der Zapfpistole 1 aktiviert wird. Gleiches gilt, wenn beim Ausführungsbeispiel nach den **Figuren 2, 3** die Plattenelemente 3a, 3b, 3c, 3d, 3e ausgehend von der figürlich dargestellten Position um ihre jeweilige Schwenkachse 13' derart in den freien Querschnitt des Einfüllstutzens 1 hineingeschwenkt werden bzw. sind, dass das sog. Fächerblenden-Drosselelement 3 zumindest annähernd geschlossen ist.

Bei beiden Ausführungsbeispielen erfolgt das Öffnen des Drosselelementes 3, d.h. das Herausbewegen der Plattenelemente 3a, 3b, (3c, 3d, 3e) aus dem freien Querschnitt des Einfüllstutzens 1 heraus mittels eines sog. Übertragungselementes 4, das beim Einführen einer Zapfpistole 2 mit dem eingangs erläuterten größeren Durchmesser - diese Zapfpistole wird im vorliegenden Text auch als "richtige" Zapfpistole 2 bezeichnet - von dieser "richtigen" Zapfpistole 2 durch deren Einführbewegung in Richtung der Längsachse 1' des Einfüllstutzens 1 (und somit ebenfalls gemäß Pfeilrichtung 6) verschoben wird.

Dieses innerhalb des Einfüllstutzens 1 konzentrisch zu diesem längsverschiebbar angeordnete und an beiden Stirnseiten offene Übertragungselement 4 ist wie ersichtlich in einem ersten Abschnitt 4a hohlzylindrisch ausgebildet. An diesen ersten hohlzylindrischen Abschnitt 4a schließt sich ein sich in Pfeilrichtung 6 verjüngenden hohler Kreiskegel-Stumpf als zweiter Abschnitt 4b an, in dessen Innenraum im wesentlichen längs der Kegelachse die Tank-Zapfpistole 2 eingeführt wird, und wobei lediglich eine "richtige" Tank-Zapfpistole 2 mit besagtem größeren Durchmesser an der Innenwand dieses Kreiskegelstumpfes mit ihrer Stirnseite 2a rundum zur Anlage kommen kann. Während also durch den hohlzylindrischen Abschnitt 4a des Übertragungselementes 4 sowohl ein falsche Zapfpistole (mit kleinerem Durchmesser) als auch eine "richtige" Zapfpistole (mit größerem Durchmesser) gemäß Pfeilrichtung 6 hindurch gesteckt werden kann, kann durch den hohlen Kreiskegelstumpf-Abschnitt 4b des Übertragungselementes 4 nur noch eine "falsche" Zapfpistole mit geringerem Durchmesser hindurch gesteckt werden.

Während somit eine "falsche" Zapfpistole beim Einführen in den Einfüllstutzen 1 bzw. in das Übertragungselement 4 nicht an der Innenwand desselben zum Anliegen kommt, stößt eine "richtige" Zapfpistole bei einer Einführbewegung gemäß Pfeilrichtung 6 an der Innenwand des zweiten, sog. Kreiskegel-Abschnittes 4b des Übertragungselementes 4 an, so dass das Übertragungselement 4 als Folge hiervon zusammen mit der bzw. veranlasst durch die Zapfpistole 2 gemäß Pfeilrichtung 6 verschoben wird. Keine Verschiebung des Übertragungselementes 4 erfolgt hingegen beim Einführen einer falschen Zapfpistole mit geringerem Durchmesser, da diese nicht an der Innenwand des Übertragungselementes 4 zum Anliegen kommt.

In diesem Zusammenhang ist ein Federelement 5 zu erwähnen, welches das Übertragungselement 4 entgegen Pfeilrichtung 6 gegen einen nicht dargestellten Anschlag zu verschieben trachtet. Befindet sich somit keine Zapfpistole 2 im Einfüllstutzen 1, so ist das Übertragungselement 4 gegenüber der in den Figuren dargestellten Position um ein gewisses Maß nach links, d.h. gegen Pfeilrichtung 6 verschoben. Veranlasst wird dies durch das hier als Wendel-Druckfeder ausgebildete und konzentrisch zum Übertragungselement 4 zwischen diesem sowie dem Einfüllstutzen 1 angeordnete Federelement 5, das sich einerseits an einem geeigneten Ringabsatz 4c an der Außenwand des Übertragungselementes 4 und andererseits an einer geeigneten Stützschulter 1a im Einfüllstutzen 1 abstützt.

Aus obigen Erläuterungen geht somit klar hervor, dass das Übertragungselement 4 lediglich bei Einführen einer "richtigen" Tank-Zapfpistole 2 in die figürlich dargestellte Position gelangen kann, wohingegen sich das Übertragungselement 4 sowohl dann, wenn sich keine Zapfpistole im Einfüllstutzen 1 befindet, als auch dann, wenn eine "falsche" Zapfpistole mit geringerem Durchmesser in den Einfüllstutzen 1 eingeführt wurde, weiter links als figürlich dargestellt in seiner sog. Ruheposition befindet.

Im weiteren zunächst alleine auf die Ausführungsform nach **Figur 1** bezugnehmend ist bei der figürlich dargestellten Position des Übertragungselementes 4 das sog. Schlitzblenden-Drosselelement 3 unter direkter Einwirkung einer bzw. mehrerer Kulissenbahn(en) 7 geöffnet, die am Übertragungselement 4 vorgesehen ist bzw. sind. Wie **Figur 1** zeigt sind am dem Kraftstofftank zugewandten rechtsseitigen Ende des Übertragungselementes 4 einander gegenüberliegend zwei im wesentlichen dreieckförmige und sich dabei in Pfeilrichtung 6 verjüngende Vorsprünge 4d vorgesehen, deren Seitenkanten jeweils eine Kulissenbahn 7 beschreiben.

Auf der in der Figurendarstellung oberen Kulissenbahn 7 des vollständig dargestellten "hinteren" Vorsprunges 4d sowie auf der - wegen der aufgebrochenen Darstellung nicht sichtbaren - oberen Kulissenbahn 7 des "vorderen" Vorsprunges 4d des Übertragungselementes 4 stützt sich das "obere" Plattenelement 3a des Drosselelements 3 mit seitlich am Plattenelement 3a angebrachten Zapfen 8 ab. In gleicher Weise stützt sich das "untere" Plattenelement 3b des Drosselelements 3 mit seitlich am Plattenelement 3b angebrachten Zapfen 8 an der unteren Kulissenbahn 7 des vollständig dargestellten "hinteren" Vorsprunges 4d sowie auf der - nur teilweise sichtbaren - unteren Kulissenbahn 7 des "vorderen" Vorsprunges 4d des Übertragungselementes 4 ab.

Die beiden Plattenelemente 3a, 3b sind - wie bereits erwähnt wurde - in einer zur Längsachse 1' senkrechten Ebene translatorisch gegeneinander verschiebbar und sind hierfür wie ersichtlich zwischen geeignet im Einfüllstutzen 1 angeordneten Führungsstegen 9a, 9b geführt. Ein jeweils nahe der Zapfen 8 zwischen den beiden Plattenelementen 3a, 3b eingespanntes Zug-Federelement 10 trachtet danach, die Plattenelemente 3a, 3b aufeinander zu zu bewegen.

Nimmt das Übertragungselement 4 die figürlich dargestellte Position ein, so sind die beiden Plattenelemente 3a, 3b unter Einwirkung der Kulissenbahnen 7 weitestmöglich voneinander beabstandet, so dass das Drosselelement 3 geöffnet ist. Befindet sich hingegen das Übertragungselement 4 in seiner oben erwähnten Ruheposition, in der das Übertragungselement 4 ohne Einwirkung einer "richtigen" Zapfpistole 2 unter Einfluss des Federelementes 5 gegenüber der Figurendarstellung nach links verschoben ist, so sind die beiden Plattenelemente 3a, 3b unter Einwirkung der Zug-Federelemente 10 aufeinander zu bewegt worden, so dass dann das Drosselelement 3 im wesentlichen geschlossen ist. In dieser zuletzt geschilderten Position werden die Plattenelemente 3a, 3b durch die Kulissenbahnen 7 auf den Vorsprüngen 4d praktisch nicht mehr auseinander gehalten.

Aus dieser Erläuterung geht auch klar hervor, dass ausgehend von vom annähernd geschlossenen Zustand des Drosselelementes 3 dann, wenn eine "richtige" Zapfpistole 2 in den Einfüllstutzen 1 eingeführt und somit das Übertragungselement gemäß Pfeilrichtung 6 nach rechts verschoben wird, die Plattenelemente 3a, 3b unter Einwirkung der Kulissenbahnen 7 gegen die Kraft der Zug-Federelemente 10 in die figürlich dargestellte Position auseinander geschoben werden, so dass dann (und nur dann) das Drosselelement 3 in seine geöffnete Position überführt wird.

Im weiteren alleine auf die Ausführungsform nach den **Figuren 2, 3** bezugnehmend ist bei der figürlich dargestellten Position des Übertragungselementes 4 das sog. Fächerblenden-Drosselelement 3 unter direkter Einwirkung einer bzw. mehrerer Kulissenbahn(en) 7 geöffnet, die an bzw. in einem Stellelement 11 vorgesehen ist bzw. sind, welches um die Einfüllstutzen-Längsachse 1' um ein gewisses Maß verdrehbar zwischen dem Übertragungselement 4 und der Innenwand des Einfüllstutzens 1 angeordnet ist. In diese Kulissenbahn(en) 7 des Stellelementes 11 greift (jeweils) ein an der Außenwand des Übertragungselementes 4 vorgesehener Mitnehmerzapfen 4e ein.

Jedes Plattenelement 3a bis 3e des Ausführungsbeispieles nach den **Figuren 2, 3** ist - wie bereits erwähnt wurde - um eine zur Einfüllstutzen-Längsachse 1' parallele Schwenkachse 13' verschwenkbar, wobei jede Schwenkachse 13' durch einen plattenelement-individuellen Zapfen 13 gebildet wird, über welchen jedes Plattenelement 3a - 3e im Einfüllstutzen 1 bzw. in einer unteren Aufnahmehülse 1b desselben verschwenkbar gelagert ist.

Das bereits genannte hülsenförmige Stellelement 11 trägt an seinem freien unteren bzw. in den Figuren rechten Ende insgesamt fünf Stifte 12, von denen jeder in eines der Plattenelemente 3a bis 3e eingreift bzw. in einen Durchbruch in diesem eingesteckt ist. Die Anordnung bzw. Kinematik ist dabei so gewählt, dass bei einer Verdrehbewegung des Stellelementes 11 um die Längsachse 1' durch Mitnahme über die Stifte 12 die Plattenelemente 3a bis 3e um deren jeweilige Schwenkachse 13' aufeinander zu oder voneinander weggeschwenkt werden. Ausgehend von ihrer figürlich dargestellten Position, in der sie aus dem freien Querschnitt des Einfüllstutzens 1 herausgeschwenkt sind (und das Drosselelement 3 somit vollständig geöffnet ist), können durch eine entsprechende Verdrehbewegung des Stellelementes 11 die Plattenelemente 3a, 3b, 3c, 3d, 3e jeweils um ihre Schwenkachse 13' mit ihrem freien Ende in den Querschnitt des Einfüllstutzens 1 hineingeschwenkt und somit das Drosselelement 3 nach **Fig.2, 3** in seinen annähend geschlossenen Zustand überführt werden.

Die entsprechende Verdrehbewegung des Stellelementes 11 um die Längsachse 1' wird dabei durch eine entsprechende Verschiebebewegung des Übertragungselementes 4 gemäß Pfeilrichtung 6 initiiert, nachdem der Mitnehmerzapfen 4e des Übertragungselementes 4 in einer geeignet geformten Kulissenbahn 7 im Stellelement 11 geführt ist. Dabei liegt diese sog. Bewegungskopplung in beiden Bewegungsrichtungen vor, d.h. dass die Schließbewegung des Drosselelementes 3 aus einer Verschiebebewegung des Übertragungselementes gegen Pfeilrichtung 6 resultiert, die - wie bereits erläutert wurde - durch Einwirkung des Federelementes 5 beim Herausführen eier "richtigen" Zapfpistole 2 aus dem Einfüllstutzen 1 hervorgerufen wird. Die gegensinnige Öffnungsbewegung des Drosselelementes 3 hingegen resultiert gegen die Kraft des Federelementes 5 aus einem Einführen einer "richtigen" Zapfpistole gemäß Pfeilrichtung 6.

Im weiteren auf beide Ausführungsbeispiele, d.h. auf sämtliche Figuren bezugnehmend sei erwähnt, dass die sog. untere Aufnahmehülse 1b des Einfüllstutzens 1 durch der sog. Tankzulauf gebildet wird, jedoch kann dies sowie eine Vielzahl weiterer Details insbesondere konstruktiver Art durchaus abweichend vom gezeigten Ausführungsbeispiel gestattet sein, ohne den Inhalt der Patentansprüche zu verlassen. Insbesondere können verschiedene Dichtringe an geeigneten Stellen vorgesehen sein, bspw. auch im Hinblick auf eine Minimierung der Emissionen in die Umgebung. Stets erhält man jedoch eine sichere und einfache Vorrichtung, mit Hilfe derer insbesondere eine Falschbetankung von dieselmotorisch angetriebenen Kraftfahrzeugen mit Bleifrei-Ottokraftstoff vermieden werden kann.

### Bezugszeichenliste:

- 1: Einfüllstutzen
- 1': Längsachse von 1
- 1a: Stützschulter
- 1b: untere Aufnahmehülse
- 2: Tank-Zapfpistole ("richtige" Zapfpistole mit größerem Durchmesser)
- 2a: Stirnseite von 2
- 3: Drosselelement
- 3a,b: Plattenelement
- 3c,d,e: Plattenelement
- 4: Übertragungselement
- 4a: erster Abschnitt von 4
- 4b: zweiter Kreiskegelstumpf-Abschnitt von 4
- 4c: Ringabsatz
- 4d: Vorsprung (in **Fig.1**)
- 4e: Mitnehmerzapfen (in **Fig. 2, 3**)
- 5: Federelement (auf 4 einwirkend)
- 6: Pfeilrichtung: Einführen einer Tank-Zapfpistole
- 7: Kulissenbahn
- 8: Zapfen (an 3a, 3b in **Fig.1**)
- 9a,b: Führungssteg (für 3a, 3b in in **Fig.1**)
- 10: Zug-Federelement (für 3a, 3b in in **Fig.1**)
- 11: Stellelement (in **Fig. 2, 3**)
- 12: Stift (an 11 in **Fig. 2, 3**)
- 13: Zapfen (in **Fig. 2, 3**)
- 13': Schwenkachse

## Patentansprüche

1. Kraftfahrzeug-Kraftstofftank mit einem Einfüllstutzen (1), der hinsichtlich seiner Abmessung zur Aufnahme einer einen größeren Durchmesser aufweisenden Tank-Zapfpistole (2), insbesondere einer Zapfpistole für Dieselkraftstoff, vorgesehen ist, sowie mit einem Element, welches auf das Einführen einer Tank-Zapfpistole (2) mit dem besagten größeren Durchmesser anspricht und daraufhin ein Befüllen des Kraftstofftanks zulässt, während bei Einführen einer Tank-Zapfpistole (2') mit einem kleineren Durchmesser (d') in den Einfüllstutzen (1) ein Befüllen des Kraftstofftanks zumindest behindert wird,
**dadurch gekennzeichnet, dass** das Element in Form eines im Einfüllstutzen (1) stromab der vollständig in diesen eingeführten Zapfpistole (2) angeordneten Drosselelements (3) ausgebildet ist, das in seiner Schließposition den freien Querschnitt des Einfüllstutzens (1) erheblich einschränkt und mittels eines Übertragungselementes (4) in seine den Querschnitt des Einfüllstutzens (1) im wesentlichen freigebende Offenposition gebracht werden kann, wobei am Übertragungselement (4) lediglich eine in den Einfüllstutzen (1) eingeführte Tank-Zapfpistole (2) mit besagtem größeren Durchmesser zur Anlage kommen kann, eine Tank-Zapfpistole (2') mit kleinerem Durchmesser jedoch nicht, so dass das Drosselelement (3) lediglich beim Einführen einer Tank-Zapfpistole (2) mit besagtem größeren Durchmesser von dieser in die freigebende Offenposition gebracht werden kann.

2. Kraftfahrzeug-Kraftstofftank nach Anspruch 1,
**dadurch gekennzeichnet, dass** das Drosselelement (3) aus einem oder mehreren translatorisch in den freien Querschnitt des Einfüllstutzens (1) hineinschiebbaren Plattenelement(en) (3a, 3b) besteht.

3. Kraftfahrzeug-Kraftstofftank nach Anspruch 1,
**dadurch gekennzeichnet, dass** das Drosselelement (3) aus einem oder mehreren in den freien Querschnitt des Einfüllstutzens (1) hineinschwenkbaren Plattenelementen (3a - 3e) besteht.

4. Kraftfahrzeug-Kraftstofftank nach Anspruch 3,
**dadurch gekennzeichnet, dass** die Plattenelemente (3a, 3e) des Drosselelements (3) jeweils um eine im wesentlichen parallel oder senkrecht zur Längsachse (1') des Einfüllstutzens (1) verlaufende Schwenkachse (13') verschwenkbar sind.

5. Kraftfahrzeug-Kraftstofftank nach einem der vorangegangenen Ansprüche,
**dadurch gekennzeichnet, dass** das oder die Plattenelemente (3a,3e) durch Federkraft in ihrer Schließposition gehalten wird/werden.

6. Kraftfahrzeug-Kraftstofftank nach einem der vorangegangenen Ansprüche,
**dadurch gekennzeichnet, dass** das von einer Zapfpistole (2) mit größerem Durchmesser längs der Längsachse (1') des Einfüllstutzens (1) gegen die Kraft eines Federelements (5) verschobene Übertragungselement (4) unter Zwischenschaltung einer Kulissenbahn (7) auf die Plattenelemente (3a - 3e) im Öffnungssinn einwirkt.

7. Kraftfahrzeug-Kraftstofftank nach einem der vorangegangenen Ansprüche,
**dadurch gekennzeichnet, dass** das Übertragungselement (4) abschnittsweise in Form eines sich in Einführrichtung (6) der Tank-Zapfpistole (2, 2') verjüngenden Kreiskegel-Stumpfes (4b) ausgebildet ist, in dessen Innenraum im wesentlichen längs der Kegelachse die Tank-Zapfpistole (2, 2') eingeführt wird, wobei lediglich eine Tank-Zapfpistole (2) mit besagtem größeren Durchmesser an der Innenwand dieses Kreiskegelstumpfes (4b) mit ihrer Stirnseite (2a) rundum zur Anlage kommen kann.

8. Kraftfahrzeug-Kraftstofftank nach Anspruch 6 oder 7,
**dadurch gekennzeichnet, dass** die Kulissenbahn (7) am Übertragungselement (4) vorgesehen ist.

9. Kraftfahrzeug-Kraftstofftank nach Anspruch 6 oder 7,
**dadurch gekennzeichnet, dass** das Übertragungselement (4) mit einem Mitnehmerzapfen (4e) oder dgl. versehen ist, der in eine Kulissenbahn (7) eines Stellelements (11) eingreift, welches das oder die Plattenelement(e) (3a-3e) bewegt.

## Claims

1. A vehicle fuel tank with a filler neck (1) dimensioned so as to receive a larger-diameter tank-filling nozzle (2), especially a filler nozzle for diesel fuel, and also comprising an element which, when a filler nozzle (2) having the said larger diameter is inserted into a tank, responds by allowing the tank to be filled, whereas when a filler nozzle (2') having a smaller diameter (d') is inserted into the filler neck (1), filling of the tank is at least inhibited,
**characterised in that** the element is in the form of a throttle element (3) disposed in the filler neck (1) downstream of the nozzle (2) completely inserted into it, and in its closed position the throttle element considerably restricts the free cross-section of the filler neck (1) but can be brought by a transmission element (4) into the open position in which it substantially unblocks the cross-section of the filler neck (1), when only a filler nozzle (2) having the said larger diameter can abut the transmission element (4) when inserted into the filler neck (1) whereas a smaller-diameter nozzle (2) cannot so abut, so that the throttle element (3) can be brought into the open or release position only by inserting a filler nozzle (2) having the said larger diameter.

2. A tank according to claim 1, **characterised in that** the throttle element (3) comprises one or more plate elements (3a, 3b) insertable in translation into the free cross-section of the filler neck (1).

3. A tank according to claim 1, **characterised in that** the throttle element (3) comprises one or more plate elements (3a - 3e) pivotable into the free cross-section of the filler neck (1).

4. A tank according to claim 3, **characterised in that** the plate elements (3a - 3e) of the throttle element (3) are each pivotable around an axis (13') substantially parallel or at right angles to the longitudinal axis (1') of the filler neck (1).

5. A tank according to any of the preceding claims, **characterised in that** the plate element or elements (3a - 3e) are held in the closed position by spring force.

6. A tank according to any of the preceding claims, **characterised in that** the transmission element (4) pushed against the force of a spring element (5) along the longitudinal axis (1') of the filler nozzle (1) by a larger-diameter filler nozzle (2) acts in the opening direction on the plate elements (3a - 3e) with interposition of a slotted track (7).

7. A tank according to any of the preceding claims, **characterised in that** parts of the transmission element (4) are in the form of a truncated circular cone (4b) tapering in the direction (6) for inserting the filler nozzle (2, 2'), which is inserted into the interior of the cone substantially along the axis thereof, wherein only a filler nozzle (2) having the said larger diameter can be brought into abutment via its end face (2a) against the inner wall of the said truncated cone (4b).

8. A tank according to claim 6 or 7, **characterised in that** the slotted track (7) is provided on the transmission element (4).

9. A tank according to claim 6 or 7, **characterised in that** the transmission element (4) is provided with a drive journal (4e) or the like which engages in a slotted track (7) of an adjusting element (11) which moves the plate element or elements (3a - 3e).

## Revendications

1. Réservoir de carburant pour un véhicule avec un embout (1), prévu conformément à ses dimensions pour recevoir un pistolet de remplissage de réservoir (2) présentant un diamètre plus grand, notamment un pistolet de remplissage de gazole, avec un élément qui lors de l'introduction d'un pistolet de remplissage de réservoir (2) correspond au diamètre plus grand et permet ainsi un remplissage du réservoir de carburant, alors que, lors de l'introduction dans l'embout (1) d'un pistolet de remplissage de réservoir (2') avec un diamètre plus petit (d'), le remplissage du réservoir de carburant est au moins empêché,
**caractérisé en ce que**
l'élément a la forme d'un organe d'étranglement (3) disposé dans l'embout (1) de remplissage en aval du pistolet de remplissage (2) entièrement introduit dans celui-ci, organe d'étranglement qui dans sa position de fermeture restreint considérablement la section libre de l'embout de remplissage (1) et qui au moyen d'un organe de transmission (4) peut être amené dans sa position ouverte libérant essentiellement la section de l'embout de remplissage (1), seul un pistolet de remplissage de réservoir (2) avec le diamètre plus grand introduit dans l'embout (1) pouvant venir en position sur l'organe de transmission (4), et non pas un pistolet de remplissage de réservoir (2') avec un diamètre plus petit, de sorte que l'organe d'étranglement (3) peut être amené dans la position ouverte par celui-ci uniquement lors de l'introduction d'un pistolet de remplissage de réservoir (2) avec le diamètre plus grand.

2. Réservoir de carburant pour un véhicule selon la revendication 1,
**caractérisé en ce que**
l'organe d'étranglement (3) comprend un ou plusieurs élément(s) de plateaux (s) (3a, 3b) déplaçables en translation intérieure dans la section libre de l'embout de remplissage (1).

3. Réservoir de carburant pour un véhicule selon la revendication 1,
**caractérisé en ce que**
l'organe d'étranglement (3) comprend un ou plusieurs élément(s) de plateaux (s) (3a-3e) relevables dans la section libre de l'embout de remplissage (1).

4. Réservoir de carburant pour un véhicule selon la revendication 3,
**caractérisé en ce que**
les éléments de plateaux (3a-3e) de l'organe d'étranglement (3) sont respectivement pivotables autour d'un axe de pivotement (13') essentiellement parallèle ou perpendiculaire à l'axe longitudinal (1') de l'embout de remplissage (1).

5. Réservoir de carburant pour un véhicule selon l'une des revendications précédentes,
**caractérisé en ce que**
le ou les élément(s) de plateaux (3a-3e) est/ sont maintenu(s) dans leur position de fermeture par une force élastique.

6. Réservoir de carburant pour un véhicule selon l'une des revendications précédentes,
**caractérisé en ce que**
l'organe de transmission (4) déplacé sous la force d'un élément ressort (5) par un pistolet de remplissage (2) avec un diamètre plus grand le long de l'axe longitudinal (1') de l'embout (1) agit dans le sens d'ouverture sur les éléments de plateaux (3a-3e) par l'intercalage d'une glissière coulissante (7).

7. Réservoir de carburant pour un véhicule selon l'une des revendications précédentes,
**caractérisé en ce que**
l'organe de transmission (4) est configuré en coupe sous la forme d'un cône tronqué circulaire (4b) se rétrécissant dans la direction d'introduction (6) du pistolet de remplissage de réservoir (2, 2') à l'intérieur duquel le pistolet de remplissage de réservoir (2, 2') est introduit essentiellement longitudinalement par rapport à l'axe de cône, seul un pistolet de remplissage de réservoir (2) avec le diamètre plus grand pouvant venir en position contre la paroi interne de ce cône tronqué circulaire (4b) avec sa face frontale (2a) tout autour.

8. Réservoir de carburant pour un véhicule selon la revendication 6 ou 7,
**caractérisé en ce que**
la glissière coulissante (7) est prévue sur l'organe de transmission (4).

9. Réservoir de carburant pour un véhicule selon la revendication 6 ou 7
**caractérisé en ce que**
l'organe de transmission (4) est doté d'un pivot d'entraînement (4e) ou similaire qui s'engrène avec une glissière coulissante (7) d'un organe de commande (11), lequel fait bouger le ou les élément(s) de plateaux (3a-3e).
